# EUROPEAN PATENT SPECIFICATION

(11) **EP 0 919 739 B1**
(45) Date of publication and mention of the grant of the patent: **21.07.2004**
(21) Application number: 98309814.6
(22) Date of filing: 01.12.1998
(51) Int. Cl.: F16C 33/46

(54) **Cage for roller bearing**
Käfig für Wälzlager
Cage pour palier à roulement

(30) Priority: 01.12.1997 JP 34364997
(43) Date of publication of application: 02.06.1999
(73) Proprietor: Koyo Seiko Co., Ltd., Osaka-City (JP)
(72) Inventor: Sakai, Kentarou, Hamura-shi, Tokyo (JP)
(74) Representative: Gibbs, Christopher Stephen

(56) References cited:
- EP-A- 0 533 292
- DE-A- 19 738 331
- GB-A- 1 352 990
- US-A- 4 797 015
- US-A- 5 033 878
- PATENT ABSTRACTS OF JAPAN vol. 1997, no. 11, 28 November 1997 (1997-11-28) & JP 09 177793 A (NTN), 11 July 1997 (1997-07-11)

## Description

The present invention relates to a cage for a roller bearing, in particular to one made of a synthetic resin.

Conventionally, a synthetic resin cage for a roller bearing includes a cylindrical body made of a synthetic resin. A number of axially extending pockets for accommodating respective rollers are formed in the cylindrical body and arranged in the circumferential direction of the cylindrical body at predetermined intervals. Columnar or wall portions are formed in the cylindrical body so as to separate adjacent pockets from each other. In other words, in the cage, two annular bodies axially separated from each other are integrally connected by a number of columnar portions arranged at predetermined intervals in the circumferential direction of the cage. Each pocket is defined by the opposite annular bodies and the adjacent columnar portions.

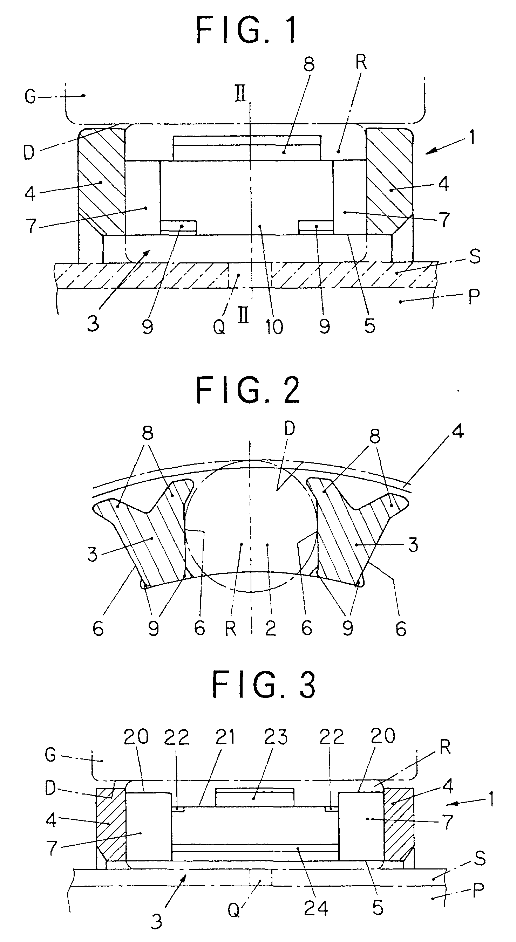

FIG. 3 shows an example of such a conventional synthetic resin cage for a roller bearing (see Japanese Patent Application Laid-Open (*kokai*) No. 979268) on which the preambles of claims 1 and 6 are based.

In the cage 1 of FIG. 3, the radially outer surface of a columnar portion 3 is a portion of a cylindrical surface which is in parallel with the outer circumferential surface of the cylindrical body or outline of the cage 1. The radially inner surface 5 of the columnar portion 3 is a portion of the inner circumferential surface of the cylindrical body. Circumferentially opposite side surfaces of the columnar portion 3 extend along the axial direction of the cage 1 and are substantially in parallel with the radial centrelines or planes of the corresponding pockets, so that the pocket is of more or less constant width over its (radial) height.

The axial end regions 20 of the radially outer surface of the columnar portion 3 adjacent to the respective annular bodies 4 are portions of a cylindrical surface whose radius is somewhat smaller than that of the outer circumferential surface of the cylindrical body, i.e. of the outer circumferential surfaces of the annular bodies 4. The outer circumferential surfaces of the annular bodies 4 serve as guide surfaces for the cage 1. The central region 21 of the radially outer surface of the columnar portion 3, located between the axially opposite end regions 20, is a portion of a cylindrical surface whose radius is smaller again than that of the axially opposite end regions 20, and serves as the surface of a passageway for lubrication oil.

Grooved portions 7 are formed in the circumferentially opposite side surfaces of the columnar portion 3 at axially opposite end regions, which in fact correspond to the axially opposite end regions 20. Accordingly, the thickness of the columnar portion 3 as measured circumferentially at the grooved portions 7 is less than that as measured at the other, central, regions of the columnar portion 3.

Auxiliary roller-retaining portions 22 are formed on either circumferential edge of the radially outer surface of the columnar portion 3 at axially opposite end portions of the central region 21 in such a manner as to project toward the pocket. A main outer roller-retaining portion 23 is formed on the central region of each circumferential edge of the radially outer surface of the columnar portion 3 in such a manner as to be located between and axially separated from the auxiliary roller-retaining portions 22 by an appropriate distance.

The outer roller-retaining portion 23 projects toward the pocket and radially outward, and more so than the auxiliary roller-retaining portions 22.

An inner roller-retaining portion 24 is formed on each circumferential edge of the radially inner surface of the columnar portion 3 in such a manner as to project toward the pocket and to extend axially all the way between the grooved portions 7. The inner roller-retaining portion 24 projects less than does the outer roller-retaining portion 23.

The roller bearing of FIG. 3 supports a gear G rotatably on a shaft S. In the roller bearing, each roller R is accommodated within a respective pocket of the cage 1. The shaft S is fitted into a hole defined by the thus-annularly-arranged rollers R which, in turn, are fitted into a shaft hole D of the gear G.

A lubrication oil feed hole P is formed in the shaft S along its axis and communicates with an oil discharge hole Q which opens onto the exterior of the shaft S at an axially central position of the cage 1.

Next will be described the flow of lubrication oil within the roller bearing during rotation of the gear G about the shaft S.

Lubrication oil is fed from external lubrication oil feed means into the feed hole P formed in the shaft S. The thus-fed lubrication oil is discharged to the interior side of the roller bearing through the oil discharge hole Q by virtue of a centrifugal force.

Thus, the lubrication oil is fed onto the circumferential surface of each roller R which is rolling on the surface of the shaft S. Blockage by the inner roller-retaining portion 24 causes the lubrication oil to flow into each pocket making a detour via the grooved portions 7 located at the axially opposite sides of the inner roller-retaining portion 24. The oil then reaches the central region 21 of the radially outer surface of the columnar portion 3 and then the shaft hole D of the gear G. After lubricating the surface of the shaft S, the circumferential surface of each roller R and the shaft hole D of the rotating gear G the lubrication oil flows out to the exterior of the roller bearing through gaps between the outer circumferential surfaces of the annular bodies 4 and the surface of the shaft hole D.

As described above, in this conventional synthetic resin cage for a roller bearing, lubrication oil fed from the external lubrication oil feed means flows into the interior side of the roller bearing via the lubrication oil feed hole P and the oil discharge hole Q of the shaft S. Within the roller bearing, as a result of the blockage by the inner roller-retaining portion 24, the lubrication oil flows into each pocket making a detour via the grooved portions 7 located at the axially opposite sides of the inner roller-retaining portion 24, before it reaches the central region 21 of the radially outer surface of the columnar portion 3 and then the shaft hole D of the gear G.

After reaching the central region 21 of the radially outer surface of the columnar portion 3, the lubrication oil flows into gaps which are formed at the opposite end regions 20 and are narrower than the gap formed at the central region 21. The lubrication oil then flows out to the exterior of the roller bearing through the gaps between the outer circumferential surfaces of the annular bodies 4 and the surface of the shaft hole D.

Accordingly, the flow of the lubrication oil within the roller bearing is not smooth. As a result, wear particles and dust which has entered into the roller bearing are not sufficiently discharged to the exterior of the roller bearing. Thus, such a roller bearing raises a problem when applied to gears and like components of construction and agricultural machinery used in dusty environments.

### SUMMARY OF THE INVENTION

In view of the foregoing, an object of the present invention is to provide a synthetic resin cage for a roller bearing which permits smooth oil flow therethrough and can satisfactorily discharge to the exterior of the roller bearing wear particles and dust that has entered it.

Embodiments of the present invention provide a synthetic resin cage for a roller bearing which is formed of a synthetic resin such that annular bodies separated from each other in the axial direction of the cage are integrally connected by columnar portions arranged in the circumferential direction of the cage at predetermined intervals, a pocket being defined by the opposite annular bodies and the adjacent columnar portions for accommodation of a roller. The radially outer surface of the columnar portion is a segment of a cylindrical surface extending in parallel with the outer circumferential surfaces of the annular bodies, which serve as guide surfaces for the cage, and its radius is appropriately smaller than that of the outer circumferential surfaces of the annular bodies, thus forming a surface of a passageway for lubrication oil extending over the entire axial length of the columnar portion. The radially inner surface of the columnar portion, together with the inner circumferential surfaces of the annular bodies, is a portion of a cylindrical surface whose diameter is greater than that of a shaft on which the roller bearing is mounted by at least 30% that of the roller. Circumferentially opposite side surfaces of the columnar portion are substantially in parallel with the radial centrelines of the corresponding pockets. Grooved portions are formed in the circumferentially opposite side surfaces of the columnar portion at axial end regions adjacent to the respective annular bodies.

An outer roller-retaining portion having a pawl-like appearance is formed on each of the circumferentially opposite edges of the radially outer surface of the columnar portion at a region located between the opposite grooved portions in such a manner as to project toward a pocket and radially outward to such a degree as not to project beyond the annular bodies. The surface of the outer roller-retaining portion that faces the pocket is slanted with respect to the side surface of the columnar portion. Inner roller-retaining portions are formed on each circumferentially opposite edge of the radially inner surface of the columnar portion only at axial end regions located between and adjacent to the respective opposite grooved portions in such a manner as to project toward the pocket. A central recessed portion, or at least a non-protruding portion, is accordingly formed between the discrete, axially spaced inner roller-retaining portions.

In the synthetic resin cage of preferred embodiments of the present invention for a roller bearing, lubrication oil fed from external lubrication oil feed means into a lubrication oil feed hole formed in the shaft is discharged into a sufficiently large space defined by the roller bearing and the shaft: the gap between the inner circumferential surface of the cage, i.e. of the wall portions along their entire length, except for the retainers, and the surface of the shaft should be at least 15% of the diameter of a roller. The central recessed portion located between the inner roller-retaining portions allows the lubrication oil fed onto the circumferential surface of each roller as it rolls on the surface of the shaft to flow readily into a pocket and then out to the radially outer surface of the columnar portion. The lubrication oil fed into the gap between the radially inner surface of the columnar portion and the surface of the shaft also flows into the grooved portions formed in the columnar portion and then flows out to the radially outer surface of the columnar portion.

After lubricating the surface of the shaft, the circumferential surface of each roller, and the shaft hole of a rotating body, the lubrication oil flows out to the exterior of the roller bearing through gaps between the outer circumferential surfaces of the annular bodies and the surface of the shaft hole. As compared to the case of a roller bearing using a conventional cage, the lubrication oil flows more smoothly because of the larger oil passageway and smaller numbers of obstacles. Thus, the cage of the present invention is suitably applicable to roller bearings for gears and like components of construction and agricultural machinery used in dusty environments.

For a better understanding of the invention embodiments of it will now be described, by way of example, with reference to the accompanying drawings, in which:
FIG. 1 is an axial sectional view of part of a synthetic resin cage for a roller bearing according to an embodiment of the present invention;
FIG. 2 is a partial radial sectional view taken along the line II-II of FIG. 1; and
FIG. 3 is a sectional view of a conventional synthetic resin cage for a roller bearing.

As shown in FIG. 1, in which the same reference numerals are used for parts corresponding to those in FIG. 3, a synthetic resin cage 1 for a roller bearing includes a cylindrical body made of an NRB resin. A number of pockets 2 for accommodating respective rollers R are formed in the cylindrical body and arranged in the circumferential direction of the cylindrical body at predetermined intervals. A columnar portion 3 is formed in the cylindrical body so as to separate adjacent pockets 2 from each other. In other words, in the cage 1, two annular bodies 4 separated from each other in the axial direction of the cage 1 are integrally connected by a number of columnar portions 3 arranged in the circumferential direction of the cage 1 at predetermined intervals. Each pocket 2 is defined by the opposite annular bodies 4 and the adjacent columnar portions 3.

The radially outer surface of the columnar portion 3 is a portion of a cylindrical surface which is parallel to the outer circumferential surface of the cylindrical body, i.e., the outer circumferential outline of the annular bodies 4, and whose radius is somewhat smaller than that of the outer circumferential surfaces of the annular bodies 4. The outer circumferential surfaces of the annular bodies 4 serve as guide surfaces for the cage 1. The radially outer surface of the columnar portion 3 serves as a surface of a passageway for lubrication oil which extends over the entire axial length of the columnar portion 3.

The radially inner surface 5 of the columnar portion 3 is a portion of the inner circumferential surface of the cylindrical body, i.e. is level with the inner surface of the annular bodies 4 along its entire length. Circumferentially opposite side surfaces 6 of the columnar portion 3 extend along the axial direction of the cage 1 and are substantially in parallel with the radial centrelines of the corresponding pockets 2, as shown in FIG. 2. The outer circumferential surfaces of the annular bodies 4, serving as the guide surfaces for the cage 1, are appropriately smaller in diameter than the shaft hole D of a gear G or a like rotational body supported by the roller bearing. Thus, the cage 1 is guided by the shaft hole D.

Grooved or rebated portions 7 are formed in the circumferentially opposite side surfaces 6 of the columnar portion 3 at axially opposite end regions adjacent to the respective annular bodies 4. Accordingly, the thickness of the columnar portion 3 as measured circumferentially at the grooved portions 7 is less than that as measured at the other, more central, regions of the columnar portion 3.

As shown in FIG. 2, an outer roller-retaining portion 8 having a pawl-like appearance is formed on each of the circumferentially opposite edges of the radially outer surface of the columnar portion 3 in the region between the opposite grooved portions 7 in such a manner as to project toward the pocket 2 and radially outward to such a degree as not to project beyond the annular bodies 4. The retaining portions 8 are slightly shorter in the axial direction than the region between the grooves 7. The surface of the outer roller-retaining portion which faces the pocket 2 is slanted with respect to the side surface 6 of the columnar portion 3. The two retaining portions form a V-shaped axial groove between them.

The pawl-like appearance of the outer roller-retaining portions 8 facilitates the radially outward release of portions of a mold corresponding to the pockets 2 in the mold release step of a plastic working process for manufacturing the cage 1 using a synthetic resin.

Inner roller-retaining portions 9 are formed on each of the circumferentially opposite edges of the radially inner surface of the columnar portion 3 in pairs at axially opposite end regions located between and adjacent to the respective opposite grooved portions 7 in such a manner as to project toward the pocket 2. A central recessed portion 10 free of obstructions is accordingly formed between the inner roller-retaining portions 9, in contrast to the prior art. Each outer retaining portion 8 extends most of the axial distance between the two recesses 7, so that there is a certain axial overlap between the inner and outer retaining portions. The inner roller-retaining portions 9 project less than does the outer roller-retaining portion 8.

It can be seen from Fig. 1 that the radially inner and outer surfaces of the wall portions 3 defining the roller pockets are level, i.e. of constant radial height. This encourages a smooth oil flow. Also, the radially outer surface is considerably below (i.e. located radially inwardly of) the outer cylindrical surface of the annular bodies 4, so that the retaining portions 8 are still located below this outer cylindrical surface, and also there is no hindrance to the flow up to the gap between the annular bodies and the rotating item, i.e. the gear.

The roller bearing of FIG. 1 supports the gear G on the shaft S so that the gear G is rotatable about the shaft S. In the roller bearing, each roller R is accommodated within a respective pocket 2 of the cage 1. The shaft S is fitted into the hole defined by the thus annularly-arranged rollers R, which, in turn, are fitted into the shaft hole D of the gear G. The diameter of the inner circumferential surface of the cage 1, including the radially inner surface of the columnar portions 3, is preferably greater than the diameter of the shaft S by at least 30% of that of the roller R, so that a gap of at least 15% the diameter of the roller R is found between the inner circumferential surface of the cage 1 and the surface of the shaft S.

Also, since the radially outermost regions of the outer roller-retaining portions 8 and the outer circumferential surface of the cage 1 including the annular bodies 4 are appropriately smaller in diameter than the shaft hole D of the gear G, there is formed a gap between the radially outermost regions and the shaft hole D and between the outer circumferential surface and the shaft hole D.

A lubrication oil feed hole P is formed in the shaft S along its axis and communicates with an oil discharge hole Q which opens onto the exterior of the shaft S at an axially central position of the cage 1 as in FIG. 3.

Next will be described the flow of lubrication oil within the roller bearing during rotation of the gear G about the shaft S.

Lubrication oil is fed from external lubrication oil feed means into the lubrication oil feed hole P formed in the shaft S. The thus-fed lubrication oil is discharged to the interior side of the roller bearing through the oil discharge hole Q by virtue of a centrifugal force.

Thus, the lubrication oil is fed onto the circumferential surface of each roller R as it rolls on the surface of the shaft S. Passing through the central recessed portion 10 located between the inner roller-retaining portions 9, the lubrication oil flows through the gap between the side surface of the columnar portion 3 and the circumferential surface of the roller R and flows axially along the inner surface of the outer roller-retaining portion 8. After flowing out from the axially opposite ends of the outer roller-retaining portion 8, the lubrication oil reaches the shaft hole D of the gear G. In addition, the lubrication oil fed into the gap between the radially inner surface of the columnar portion 3 and the surface of the shaft S flows into the grooved portions 7 and then flows out to the radially outer surface of the columnar portion 3, thus reaching the shaft hole D of the gear G.

After lubricating the surface of the shaft S, the circumferential surface of each roller R and the shaft hole D of the rotating gear G, the lubrication oil flows out to the exterior of the roller bearing through gaps between the outer circumferential surfaces of the annular bodies 4 and the surface of the shaft hole D.

In addition to the lubricating action described above, the lubrication oil discharges to the exterior of the roller bearing wear particles which have been generated in association with rotation of the gear G, and any dust which has entered the roller bearing.

## Claims

1. A cage (1) for a roller bearing, comprising annular bodies (4) separated from each other in the axial direction of the cage, and columnar portions (3) extending axially so as to connect the annular bodies, arranged around the circumferential direction of the cage at predetermined intervals in order to define pockets for accommodating rollers (R), the outer diameter of the columnar portions (3) being less than that of the annular bodies (4) so as to form a passageway for lubrication oil extending over the axial length of the columnar portion, and inner (9) and outer (8) roller-retaining means being formed on the inner and outer edges of the columnar portions;
**characterised in that** each inner roller-retaining means is formed by two axially spaced portions (9) located at opposite end regions of the columnar portion (3) so that a central unobstructed portion (10) is formed between the inner roller-retaining portions.

2. A cage according to claim 1, in which the radially outer surface of each columnar portion (3) has a substantially uniform radius smaller than that of the outer circumferential surfaces of the said annular bodies (4).

3. A cage according to claim 1 or 2, in which rebated portions (7) are formed in the circumferentially opposite side surfaces of each columnar portion at axially opposite end regions adjacent to the respective annular bodies (4) on the axial outside and to the inner retaining portions (9) on the axial inside.

4. A cage according to any preceding claim, in which the circumferentially opposite side surfaces (6) of adjacent columnar portions (3) are substantially parallel to the radial centre planes of the corresponding pockets.

5. A cage according to any preceding claim, in which each outer retaining means (8) is formed of a single retaining portion having in section a pawl-like appearance so as to project toward the pocket and radially outward to such a degree as not to project beyond the annular bodies (4), the surface of the outer roller-retaining portion (8) which faces the pocket is slanted with respect to the side surface of the columnar portion (3) ; and the roller-retaining portion (8) extends between axial locations corresponding to the locations of the two inner roller-retaining portions.

6. A synthetic resin cage (1) for a roller bearing, comprising annular bodies (4) separated from each other in the axial direction of the cage and connected by axially extending columnar portions (3) arranged around the circumferential direction of the cage at predetermined intervals in order to define pockets for accommodating rollers (R), wherein:
the radially outer surface of each columnar portion (3) forms a portion of a cylindrical surface parallel to the outer circumferential surfaces of the annular bodies, which serve as guide surfaces for the cage, and whose radius is appropriately smaller than that of the outer circumferential surfaces of the said annular bodies (4), thus forming a surface of a passageway for lubrication oil extending over the entire axial length of the columnar portion; the radially inner surface of the columnar portion, together with the inner circumferential surfaces of the annular bodies, forms a portion of a cylindrical surface; and the circumferentially opposite side surfaces of the columnar portion are substantially in parallel with the radial centrelines of the corresponding pockets;
grooved portions (7) are formed in the circumferentially opposite side surfaces of each columnar portion at axially opposite end regions adjacent to the respective annular bodies (4);
an outer roller-retaining portion (8) having a pawl-like appearance is formed on each of the circumferentially opposite edges of the radially outer surface of said columnar portion at a region located between the grooved portions (7) in such a manner as to project toward the pocket and radially outward to such a degree as not to project beyond the annular bodies (4); and the surface of the outer roller-retaining portion (8) which faces the pocket is slanted with respect to the side surface of the columnar portion (3) ;**characterized in that**
inner roller-retaining portions (9) are formed on each of the circumferentially opposite edges of the radially inner surface (5) of the columnar portion at axially opposite end regions located between and adjacent to the respective opposite grooved portions (7) in such a manner as to project toward the pocket, so that a central recessed portion (10) is formed between the inner roller-retaining portions.

7. A synthetic resin cage according to any preceding claim, wherein the radially inner surface (5) of the columnar portion and the inner circumferential surfaces of the annular bodies form portions of the same cylindrical surface, having a diameter which is greater than that of a shaft on which the roller bearing is to be mounted, by at least 30% that of the roller.

8. A roller bearing including a cage according to any preceding claim.

## Patentansprüche

1. Käfig (1) für ein Rollenlager, mit Ringkörpern (4), die in axialer Richtung des Käfigs voneinander beabstandet sind, und säulenförmigen Teilen (3), die Axialrichtung verlaufen, um die Ringkörper miteinander zu verbinden, und die in vorbestimmten Abständen in Umfangsrichtung des Käfigs angeordnet sind, um Taschen zum Aufnehmen von Rollenkörpern (R) zu bilden, wobei der Außendurchmesser der säulenförmigen Teile (3) kleiner ist als der der Ringkörper (4), um einen Durchgang für Schmieröl zu bilden, der über die axiale Länge des säulenförmigen Teils verläuft, und innere (9) und äußere (8) Rollenkörper-Halteeinrichtungen an den Innen- und Außenrändern der säulenförmigen Teile ausgebildet sind;
**dadurch gekennzeichnet, dass**
jede innere Rollenkörper-Halteeinrichtung von zwei axial voneinander beabstandeten Teilen (9) an entgegengesetzten Endbereichen der säulenförmigen Teile (3) gebildet ist, derart dass ein zentraler unversperrter Bereich (10) zwischen den inneren Rollenkörper-Halteeinrichtungen gebildet ist.

2. Käfig nach Anspruch 1, bei dem die radiale Außenfläche jedes säulenförmigen Teils (3) einen im wesentlichen gleichmäßigen Radius aufweist, der kleiner ist als derjenige der Außenumfangsfläche der Ringkörper (4).

3. Käfig nach Anspruch 1 oder 2, bei dem gefalzte Teile (7) in den umfangsmäßig entgegengesetzten Seitenflächen jedes säulenförmigen Teils an axial entgegengesetzten Endbereichen benachbart zu den jeweiligen Ringkörpern (4) auf der axialen Außenseite und benachbart zu den inneren Halteteilen (9) auf der axialen Innenseite ausgebildet sind.

4. Käfig nach einem der vorhergehenden Ansprüche, bei dem die umfangsmäßig entgegengesetzten Seitenflächen (6) benachbarter säulenförmiger Teile (3) im wesentlichen parallel zu den radialen Mittelebenen der entsprechenden Taschen verlaufen.

5. Käfig nach einem der vorhergehenden Ansprüche, bei dem jede äußere Halteeinrichtung (8) aus einem einzelnen Halteteil gebildet ist, der, im Querschnitt betrachtet, klinkenartig ausgebildet ist, um in Richtung der Tasche und radial nach außen in einem derartigen Maß vorzustehen, dass er nicht über die Ringkörper (4) hinaus vorsteht; die Fläche des äußeren Rollenkörper-Halteteils (8), die der Tasche zugewandt ist, relativ zu der Seitenfläche des säulenförmigen Teils (3) geneigt ist; und der Rollenkörper-Halteteil (8) zwischen axialen Positionen verläuft, die den Positionen der beiden inneren Rollenkörper-Halteteile entsprechen.

6. Kunstharzkäfig (1) für ein Rollenlager, mit Ringkörpern (4), die in axialer Richtung des Käfigs voneinander beabstandet und über axial verlaufende säulenförmige Teile (3) miteinander verbunden sind, welche in vorbestimmten Abständen in Umfangsrichtung des Käfigs angeordnet sind, um Taschen zum Aufnehmen von Rollenkörpern (R) zu bilden, wobei:
die radiale Außenfläche jedes säulenförmigen Teils (3) einen Teil einer zylindrische Fläche bildet, die parallel zu den Außenumfangsflächen der Ringkörper verläuft, welche als Führungsflächen für den Käfig dienen, und deren Radius entsprechend kleiner ist als derjenige der Außenumfangsflächen der Ringkörper (4), wodurch eine Fläche eines Durchgangs für Schmieröl gebildet wird, der über die gesamte axiale Länge des säulenförmigen Teils verläuft; die radiale Innenfläche des säulenförmigen Teils zusammen mit den Innenumfangsflächen der Ringkörper einen Teil einer zylindrischen Fläche bildet; und die umfangsmäßig entgegengesetzten Seitenflächen des säulenförmigen Teils im wesentlichen parallel zu den radialen Mittellinien der entsprechenden Taschen verlaufen;
genutete Teile (7) in den umfangsmäßig entgegengesetzten Seitenflächen jedes säulenförmigen Teils an axial entgegengesetzten Endbereichen benachbart zu den jeweiligen Ringkörpern (4) ausgebildet sind;
ein äußerer Rollenkörper-Halteteil (8), der klinkenartig ausgebildet ist, an jedem umfangsmäßig entgegengesetzten Rand der radialen Außenfläche des säulenförmigen Teils an einem Bereich zwischen den genuteten Teilen (7) derart ausgebildet ist, dass er in einem derartigen Maß in Richtung der Tasche und radial nach außen vorsteht, dass er nicht über die Ringkörper (4) hinaus vorsteht; und die Fläche des äußeren Rollenkörper-Halteteils (8), die der Tasche zugewandt ist, relativ zu der Seitenfläche des säulenförmigen Teils (3) geneigt ist;
**dadurch gekennzeichnet, dass**
innere Rollenkörper-Halteteile (9) an jedem der umfangsmäßig entgegengesetzten Ränder der radialen Innenfläche (5) des säulenförmigen Teils an axial entgegengesetzten Endbereichen zwischen und benachbart zu den jeweiligen entgegengesetzten genuteten Teilen (7) derart ausgebildet sind, dass sie in Richtung der Tasche vorstehen, derart dass ein mittlerer Ausnehmungsbereich (10) zwischen den inneren Rollenkörper-Halteteilen ausgebildet ist.

7. Kunstharzkäfig nach einem der vorstehenden Ansprüche, bei dem die radiale Innenfläche (5) des säulenförmigen Teils und die Innenumfangsflächen der Ringkörper Teile der gleichen zylindrischen Fläche bilden, die einen Durchmesser hat, der um mindestens 30 % des Rollenkörper-Durchmessers größer ist als der Durchmesser einer Welle, auf die das Rollenlager montiert ist.

8. Rollenlager mit einem Käfig nach einem der vorhergehenden Ansprüche.

## Revendications

1. Cage (1) pour palier à roulement, comprenant des corps annulaires (4) séparés les uns des autres dans la direction axiale de la cage, et des portions de colonne (3) s'étendant axialement de manière à relier les corps annulaires, agencées autour de la direction circonférentielle de la cage à des intervalles prédéterminés afin de définir des poches pour loger des rouleaux (R), le diamètre externe des portions de colonne (3) étant inférieur à celui de corps annulaires (4) de manière à former un passage pour l'huile de lubrification s'étendant sur la longueur axiale de la portion de colonne, et des moyens de rétention externes et internes (8, 9) des rouleaux étant formés sur les bords internes et externes des portions de colonne ;
**caractérisée en ce que** chaque moyen de rétention interne des rouleaux est formé par deux portions axialement espacées (9) situées en des régions d'extrémité opposées de la portion de colonne (3) de manière à ce qu'une portion centrale non obstruée (10) soit formée entre les portions de rétention des rouleaux internes.

2. Cage selon la revendication 1, dans laquelle la surface radialement externe de chaque portion de colonne (3) a un rayon sensiblement uniforme plus petit que celui des surfaces circonférentielles externes desdits corps annulaires (4).

3. Cage selon la revendication 1 ou 2, dans laquelle des portions rabattues (7) sont formées dans les surfaces latérales circonférentiellement opposées de chaque portion de colonne en des régions d'extrémité axialement opposées adjacentes aux corps annulaires respectifs (4) sur l'extérieur axial et vers les portions de rétention internes (9) sur l'intérieur axial.

4. Cage selon l'une quelconque des revendications précédentes, dans laquelle les surfaces latérales circonférentiellement opposées des portions de colonne adjacentes (3) sont sensiblement parallèles aux plans de centre radiaux des poches correspondantes.

5. Cage selon l'une quelconque des revendications précédentes, dans laquelle chaque moyen de rétention externe (8) est formé d'une portion de rétention unique ayant en coupe une apparence de cliquet de manière à se projeter vers la poche et radialement vers l'extérieur à un degré tel qu'elle ne se projette pas au-delà des corps annulaires (4), la surface de la portion de rétention des rouleaux externes (8) faisant face à la poche est inclinée par rapport à la surface latérale de la portion de colonne (3) ; et la portion de rétention des rouleaux (8) s'étend entre des emplacements axiaux correspondant aux emplacements des deux portions de rétention des rouleaux internes.

6. Cage en résine synthétique (1) pour un palier à roulement, comprenant des corps annulaires (4) séparés les uns des autres dans la direction axiale de la cage et reliés par des portions de colonne (3) s'étendant axialement, agencées autour de la direction circonférentielle de la cage à des intervalles prédéterminés afin de définir des poches pour loger les rouleaux (R), dans laquelle :
la surface radialement externe de chaque portion de colonne (3) forme une portion d'une surface cylindrique parallèle aux surfaces circonférentielles externes des corps annulaires, qui servent de surfaces de guidage pour la cage, et dont il est approprié que le rayon soit plus petit que celui des surfaces circonférentielles externes desdits corps annulaires (4), formant ainsi une surface d'un passage pour l'huile de lubrification s'étendant sur toute la longueur axiale de la portion de colonne ; la surface radialement interne de la portion de colonne, ainsi que les surfaces circonférentielles internes des corps annulaires, forment une portion d'une surface cylindrique ; et les surfaces latérales circonférentiellement opposées de la portion de colonne sont sensiblement en parallèle avec les axes centraux radiaux des poches correspondantes ;
des portions à rainures (7) sont formées dans les surfaces latérales circonférentiellement opposées de chaque portion de colonne en des régions d'extrémité axialement opposées adjacentes aux corps annulaires respectifs (4) ;
une portion de rétention des rouleaux externe (8) ayant une apparence de cliquet est formée sur chacun des bords circonférentiellement opposés de la surface radialement externe de ladite portion de colonne en une région située entre les portions à rainures (7) de manière à se projeter vers la poche et radialement vers l'extérieur à un degré tel qu'elle ne se projette pas au-delà des corps annulaires (4) ; et la surface de la portion de rétention des rouleaux externe (8) faisant face à la poche est inclinée par rapport à la surface latérale de la portion de colonne (3), **caractérisée en ce que**
les portions de rétention des rouleaux internes (9) sont formées sur chacun des bords circonférentiellement opposés de la surface radialement interne (5) de la portion de colonne en des régions d'extrémité axialement opposées situées entre les portions à rainures (7) opposées respectives et adjacentes à celles-ci, de manière à se projeter vers la poche, de sorte qu'une portion de renfoncement centrale (10) est formée entre les portions de rétention des rouleaux internes.

7. Cage en résine synthétique selon l'une quelconque des revendications précédentes, dans laquelle la surface radialement interne (5) de la portion à colonnes et les surfaces circonférentielles internes des corps annulaires forment des portions de la même surface cylindrique, ayant un diamètre qui est supérieur à celui d'un arbre sur lequel le palier à roulement doit être monté, d'au moins 30 % celui du rouleau.

8. Palier à roulement comprenant une cage selon l'une quelconque des revendications précédentes.
